# EUROPEAN PATENT APPLICATION

(11) **EP 4 382 640 A1**
(43) Date of publication of application: **12.06.2024**
(21) Application number: 22212520.5
(22) Date of filing: 09.12.2022
(51) Int. Cl.: C25C 3/08, C25C 7/00, G01R 15/00, C25B 15/023

(54) **A DEVICE FOR DETERMINING AT LEAST ONE PHYSICAL PROPERTY RELATED TO AN ELECTROLYSIS CELL**

(71) Applicant: Noda Technologies AB, 854 60 Sundsvall (SE)
(72) Inventor: Noda Diaz, Claro Antonio, 854 60 Sundsvall (SE)

(57) **Abstract**

The disclosure regards a device for determining at least one physical property related to an electrolysis cell, comprising: an energy harvester comprising a holding mechanism comprising a conductor coil having a number of turns along at least a part of the holding mechanism, wherein the holding mechanism is configured for fastening around an anode rod or busbar of the electrolysis cell, at least one sensor configured for measuring at least one physical property of the electrolysis cell, and a wireless transceiver unit, configured for communicating information based on the measured at least one physical property.

## Description

### Field of disclosure

The disclosure relates to a device designed for measuring physical properties in electrolysis cells.

### Background

Aluminium production is an energy-intensive industrial process demanding 12 kWh/kg of metal produced. The modern aluminium reduction cells utilize the Hall-Heroult process to reduce the aluminium oxide. In modern smelting plants, the process implementation also produce more carbon dioxide than aluminium, corresponding to near 1500 kg CO₂/t Al.

A metal production cell for producing aluminium-also known as a pot-requires a electric continuous current (CC) to carry on an electrochemical reaction in the cell. The CC refers to an alternate current (AC) that has been rectified. Thus, the CC always circulate in the same direction but its magnitude changes rapidly in time. A plant typically comprises several hundred cells, connected in series forming a potline. The cells are electrically fed by a transformer and rectifier system providing a massive CC, amounting to ~10⁵ amps, to all cells in the potline.

Over time, increased optimization has resulted in longer potlines, higher amperage, mechanized operations, and computer control of aluminium production cells. The modern aluminium cell controller implements computer control of aluminium oxide feeding and other critical procedures like anode's beam raising or anode-cathode distance adjustments, during the anode change operation. At the same time, increased automation of the positioning of the anode facilitate the management of cell operations nowadays.

However, the cell's data-like bath acidity, temperature and power input-are limited and are based on estimated process variable values. Incidentally, the cell voltage is the only continuous signal used by the cell controller to derive control functions for adjusting the cell target resistance and determining the precursors feeding intensity.

The modern Hall-Heroult cell designs for large-scale aluminium production involve a cathode at the cell bottom and a set of carbonaceous anodes positioned over the electrolyte. The cell anodes are connected in parallel. Multiple factors create current imbalance among various anodes which affect the cell's current efficiency and metal yield. During the electrolysis reaction, the carbon from the anodes reacts with the ion species in the electrolyte forming mainly carbon dioxide. Thus, the consumable anodes imposes periodic replacements by new ones within 36 hours on each cell.

### Summary

There exists a need for enhanced process instrumentation to increase the observability of electrolysis cells and establish the optimal conditions for increasing the aluminium production plants profitability and reduce environmental impact. Likewise, a commercial battery array for on-grid energy storage applications, like a liquid metal battery (LMB) array, requires balancing the charge and discharge loads among multiple electrolysis cell configurations. Given similar power rectification circuits as in an aluminium plant, the sensing device and energy harvesting operating principle are also applicable, e.g., in an LMB farm.

The present disclosure relates to a device for determining at least one physical property related to an electrolysis cell, comprising:
- an energy harvester comprising a holding mechanism comprising a conductor coil having a number of turns along at least a part of the holding mechanism, wherein the holding mechanism is configured for fastening around an anode rod or busbar of the electrolysis cell,
- at least one sensor configured for measuring at least one physical property of the electrolysis cell, and
- a radio transceiver unit, configured for communicating information based on the measured at least one physical property.

The present disclosure discloses a device comprising at least one sensor for monitoring a physical magnitude of the production cell or its immediate surrounding environment. The device comprises an electromagnetic energy harvesting mechanism to power electronics of the device. The device can comprises two transceiver units. One transceiver can use the reactive field on the potline's current-carrying infrastructure for inter-device communications. Thus, supporting edge-computing applications, which can aggregate multiple readings from devices installed at different locations in the cell and compute cell-level parameters to assist in the alumina reduction process optimization. For example, the anode current imbalance, and the surface current distribution of the electrolyte. An additional transceiver relies on a radio link to communicate with the cell controller wirelessly.

The plant's rectifier system provides the feeding current comprising a DC combined with a residual AC having an energy spread spectrum that originates in the rectifier circuit. The energy harvester harvests a tiny fraction of the energy flowing in the anode bar or the busbar to the cell to feed a scavenger circuit that powers the device including the at least one sensor. The scavenger circuit can include a transformer that capture the magnetic energy instantaneously stored in a toroidal coil positioned around the anode bar. The disclosed device stores the energy collected from the secondary windings of the pulse transformer on a supercapacitor to feed the device's electronics, providing enough energy for a maintenance-free, long-term operation of the sensor. The stored energy on the supercapacitor provides power to the device, even in in the absence of the harvester energy input.

The pulse transformer design can include a Hall-effect (HE) or tunnel magnetoresistance (TMR) magnetic field sensor that senses the total field in the toroidal magnetic core, resulting from both the direct and pulsed current in the anode bar. The magnetic field sensor can be an indirect but accurate measurement of the anode rod or busbar current profile, in the relevant portion of the current signal frequency spectrum. Additionally, the magnetic field sensor can assist in maintain the operational point of the pulse transformer, maximizing its energy harvesting capability.

The device for measuring the at least one property in an electrolysis cell can be installed in the anode bar. The device may provide a continuous monitoring of the at least one property like e.g. the anode current. In addition, the device can also be installed, in the busbar element of the electrolysis cell which distributes the electrical current to the many anodes. The sensor can be self-contained, self-powered without the necessity of external wiring, galvanically isolated from the rest of the system, and wirelessly communicating with other sensor-node devices and an external computing unit. The sensor readings bring valuable information for optimizing the cell operations across the different process dynamics, including but not limited to anode butt gas bubble formation, cell magnetohydrodynamics, anode positioning during the anode change operation, and the cell's current efficiency optimization.

Since the device comprises the energy harvester, no electrical cable is necessary for powering the device.

Since the device comprises up to two transceiver units, no electrical wiring is necessary for transferring measured and/or monitored data from the device to a computer or other central processing unit or external computing unit that will process the transferred data.

In an embodiment, the device can comprise a voltage sensor over two contiguous ohmic contact points on the anode rod or busbar surface as a proxy to determine the current flowing through each anode rod or busbar of the electrolysis cell. The segment of the anode rod among the two ohmic contacts behaves as a shunt resistor, allowing the current measurement. Monitoring the current flowing through each single anode individually provides valuable information about the status in the cell(s). Similar current flowing through all anode rods may indicate a stable and efficient operation of the cell. While a current unbalance among one or various anode rods may require further supervisions and correcting actions.

In an embodiment, the device can comprise a sensor, like an HE or TMR sensor, configured for measuring the static magnetic field generated by the electrical current flowing through the anode rod or the busbar in the electrolysis cell. Continuously monitoring the current in the cell(s) is valuable as explained above.

### Description of the drawings

The disclosure will in the following be described in greater detail with reference to the accompanying drawings:
Fig. 1, shows a schematic view of an embodiment of a device measuring properties in a busbar or anode rod of an electrolysis cell.
Fig. 2A and 2B, show a schematic cross sectional view in two different projections of an embodiment of a device measuring properties in a busbar or anode rod of an electrolysis cell, in two distinct projections.
Fig. 3, show a flow chart of the different connections between the different units comprising the device measuring properties in a busbar or anode rod of an electrolysis cell.

### Detailed description

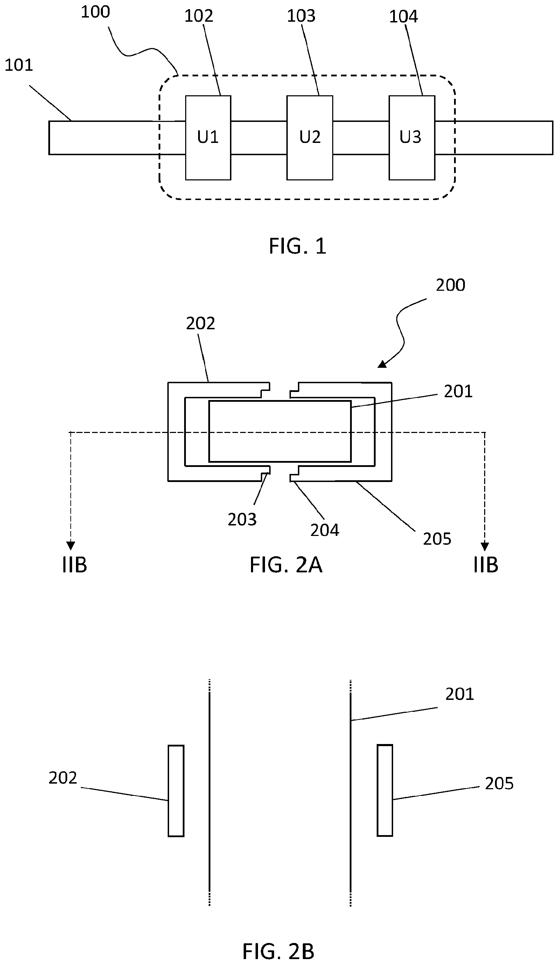

Fig. 1 shows one embodiment of a device 100 attached to a busbar or anode rod 101 of an electrolysis cell for measuring one or more properties of the busbar or the anode rod for determining one or more properties of the cell. The device 100 can be used in electrolysis cells such as in an aluminium metal production cell. The device can be used in other electrolysis cells, such as in a liquid metal battery cells for large-scale on-grid energy storage or production.

In an embodiment, the device may comprise three units: a first unit comprising the sensor 102 for determining one or more properties of the electrolysis cell, a second unit comprising an energy harvester 103 for extracting a part of the electrical energy flowing through the busbar or anode rod 101 for powering the device 100, and a third unit comprising wireless communication device 104 for allowing wireless communication between the device and an external computing unit for transmitting the data measured by the sensor 102.

A smelting plant for producing aluminium contains electrolytic cells-also known as pots-connected in series in potlines and driven by continuous electrical current equipment known as a rectiformer. The rectiformer refers to a transformer with three-phase primary and multiple secondary windings that, combined with solid-state rectifiers, supply the pots with direct current. Typically, another device, referred to as the regulating transformer, is used before the feeding grid current reaches each primary winding of the rectiformer. This regulating transformer's secondary windings can include an on-load tap changer for the regulation range of its output voltage, fed to the rectiformer.

The function of the regulating transformer is to allow enough margin to dynamically compensate for voltage variations in the feeding grid and load variations in the potline. Thus, maintaining the desired constant current in the potline.

The system includes integrated passive harmonic filters connected to the feeding grid. The function of the passive filters is to absorb the energy of the high-frequency harmonics created by the currents circulating through the nonlinear load that the solid-state rectifiers introduce in the circuit. In this way, the filter precludes the energy from these harmonics to travel towards the feeding grid.

Aluminium smelting is a continuous industrial process requiring hundreds of megawatts; the conventional potline powering scheme consists of multiple rectiformer connected in parallel. This configuration aims to reduce the harmonic currents at the coupling point, facilitate harmonic elimination, boost power capability, deal with operational constraints, and meet cost/space requirements. The higher the pulse order of the system, the higher the fundamental frequency of the pulsed continuous current.

The spatially-distributed-element electrical circuit of a potline imposes restrictions on the design options. While it is possible to reduce the resistance of the busbar by increasing the area the currents transverses, reducing the inductive component of the circuit is more challenging to achieve. Thus, a potline displays a predominantly inductive resistor-inductor (RL) circuit.

The result is that the current flowing through the potline is predominantly DC, accompanied by a relatively weak high-frequency harmonic composition. Therefore, in addition to a several-hundred-megawatts DC power to drive the reactions, there are a minimum of few-hundred-watts reactive power circulating through the potline, continuously-contributed by the amplitude variations (ripple) in the rectiformer's output voltage. Since the reactive field is associated with the inductive reactance component of the circuit, it has a relatively homogeneous spatial distribution.

In Fig. 1 is shown a device 100 comprising an energy harvester 103 designed to tap into a small fraction of the reactive power circulating through the potline. The energy harvester herein disclosed employs a toroidal transformer built around the busbar or the anode rod to tap into this reactive energy. The device operates in a strong static magnetic field and provides effective coupling to the weak reactive component of the magnetic field.

In an embodiment, the transformer design may or may not include a ferromagnetic material core. Thus, the static magnetic field does not affect the transformer's functioning. In this embodiment, not having a ferromagnetic core simplifies the transformer design, reduces cost, and allows for at least a milliwatt-level energy harvester. A non-ferromagnetic core may be comprised of air.

In another embodiment, the energy harvester unit of the disclosed device comprises a conductor coil having a number of turns defining a hollow core, wherein the core is filled with air or a metallic compound. Said conductor coil is a primary conductor coil and the device further comprises a secondary conductor coil, wherein the primary conductor coil and the secondary conductor coil are configured to function as a transformer. The harvester unit of the device comprises a primary conductor coil of a transformer, having toroidal or linear geometry. The transformer resonates to one, or selectively at various, harmonic compositions of the reactive magnetic field. A resonating LC circuit in the transformer's secondary winding induces large voltages. It reflects the load as a more significant series resistance into the primary winding formed by the anode rod going through the toroidal coil.

In an embodiment, the transformer can use a purpose-engineered ferromagnetic core to increase the magnetic coupling to the reactive field present in the line and enhance the power capability of the harvester. As the magnetic domains forcefully align with the static field, their magnetization no longer amplifies the strength of the time-varying reactive field. A saturation of the core magnetic domains is undesired and the static component of the magnetic field should be avoided. In case of saturation, the effective magnetic permeability of the core will be compromised or eliminated.

The engineered ferromagnetic core for this application can include various magnetic materials. One material displays high coercitivity and remanence fields, i.e., rare earth magnet alloys like neodymium (NdFeB). The other material substantially contributes to the core's magnetic permeability-i.e., high saturation flux density and low losses achieved with Ni-Fe cores. This combination allows permanent magnetization while exhibiting high permeability despite an intense external static field. The permanent magnetization of the NdFeB domains opposes the external static field, allowing the Ni-Fe domains to contribute to the time-varying reactive field. The resulting core minimizes the magnetic reluctance to the reactive field, thus maximizing the temporal flux variation and enhancing the current transformer's ability to tap into the reactive energy field.

In an embodiment, the transformer includes an auxiliary coil to further reduce the static field component, bringing the operational point of the core closer to the origin of its hysteresis loop. The auxiliary coil can be fed with excess energy from the harvester itself. While the auxiliary coil dissipates energy in the form of heat due to the Joule effect, it maximizes the magnetic permeability of the core, increasing the magnetic coupling to the reactive field, and the net harvested energy.

In an embodiment, the harvester transformer and the static magnetic field sensor arrangement, used to indirectly measure the DC current flowing through the bar, can be two separate but contiguous devices-simplifying the requirements for the magnetic core.

In one embodiment, the energy harvester device further comprises a capacitor configured for storing electrical energy from the secondary conductor coil. Such capacitor, which is typically a supercapacitor, is configured for supplying the electrical energy to the at least one sensor. The secondary of the transformer feeds a rectification circuit, voltage boosting, supercapacitor, and an electronic controller. The functionality of the controller is to maximize the energy harvested. For example, by adapting the resonance frequency of the transformer to the harmonic component that provides the most yield.

In the embodiment from Figure 1, the sensor or sensors for measuring properties of the electrolytic cell are located in the unit 102 in Fig. 1. Several devices can be alternatives to obtain an accurate DC measurement from the anode beam. The device disclosed in the present disclosure allows for contactless measurement, using the static magnetic field created by the DC component of the electrical current carried by the anode or busbar. The sensing device can be a Hall-effect (HE) or tunnel magnetoresistance (TMR) magnetic field sensor. Providing enough bandwidth to measure the current variations in the time scale relevant to the cell's process variability. A 300-samples-per-second anode current quantization captures the process's anode bubble formation, magneto hydrodynamics, and electrolytic bath chemical composition inhomogeneities effects. The information contained in this current signals are valuable to enhance the accuracy of the digital twin of the production cell.

Multiple HE or TMR sensing elements installed equidistant to the current-carrying conductor increase accuracy. In the absence of a ferromagnetic material, the readings from various sensors can accurately estimate the current from multiple static field measurements-only the current circulating through the intended conductor produces the same magnetic field intensity on all the sensor devices. In contrast, any other current distribution from nearby conductors will introduce a field gradient among the sensing devices. The number of sensing devices is optimized according to the foreseeable current distribution in the installation site. Four devices or more capture enough symmetry for an accurate enough anode current measurement.

In an embodiment, a toroidal air-gapped ferromagnetic core confines the static magnetic field. The air gap allows increasing the magnetic core saturation threshold by introducing magnetic reluctance in the air gap path. The air gap is small enough to maintain the magnetic flux density (B) approximately constant across the opening and the core. The HE or TMR magnetic field sensor is mounted in the air gap to detect B. Confining the magnetic field as described above reduce the magnetic reluctance, and restricts the contribution to the magnetic field in the core path to the current flowing through the inner ring of the toroidal core. The confinement increases the measurement accuracy by not amplifying the magnetic contributions from the nearby currents, busbar, other anodes, etc.

In an embodiment, the device comprises a series of sensors to measure the physical properties of the electrolysis cell or its immediate surrounding environment. At least one sensor might include a thermometer, thermocouple, thermal infrared temperature sensor, or a thermal camera sensor to obtain the temperature in the anode bar, the anode yoke, or a thermogram image of the upper surface of the cell. The temperature readings for any of these parts enhance the real-time thermal modelling of the cell and the accuracy of the cell's digital twin. Other sensors might include a MEMS gas-chemical-composition measuring device to analyse the emanating gases from the electrolysis cell. The gas sensor may comprise a photoionization detector or a nondispersive infrared sensor. Determining the concentration of emanating gases from the electrolysis cell informs the digital twin about the redox reaction by-products, helping to quantify fugitive emissions harmful to human health and the environment, e.g., hydrogen fluoride and sulfur dioxide. Assist in early detection or confirmation of anode effects in the cell. The anode effect delivers potent greenhouse gases-e.g., tetrafluoromethane and hexafluoroethane, and increases the formation of carbon monoxide.

In an embodiment shown in Fig. 2A and 2B, the device 200 comprises a holding mechanism 203 and 204 which is fastened around an anode rod or busbar 201 of the electrolytic cell by e.g. a compression mesh wrap or clamp mechanisms. Such holding mechanism 203 and 204 can comprise a set of clamps that allow to locate and fix the device at a precise height or position in the anode or busbar. Said set of clamps can be placed in an open configuration, allowing the device to be divided in a number of parts 202 and 205 and be removed or exchanged, and a closed configuration, fastening the device tight in position around the anode or busbar 201. Fig. 2B shows a cross-section of the device 200 and the anode rod or busbar 201 as shown in Fig. 2A by the dashed line IIB.

Other mechanisms of fastening the device might comprise a mesh wrapping around the anode or busbar and exerting a compressive force to fix the device at the desired place. Such wrapping mesh comprises a relaxed configuration where the holding mechanism is not exerting a compressive force and allowing for an easy replacement of the device. The wrapping mesh might also comprise a tightening configuration allowing to fix the device in place around the anode or busbar in a desired position. A person skill in the art would understand that trivial variations of such clamping or holding mechanism are possible for fixing the device in the desired position on the anode or busbar. Such holding mechanisms are within the scope of the present disclosure.

The sensing device, installed around the anode beam, allows for direct measurement of the anode current. This arrangement facilitates the installation of additional sensors to determine other magnitudes. Additional relevant sensors include temperature, the concentration of various gases in the air, thermography of the cell surface, and visual monitoring through an image sensor, among other possibilities.

In an embodiment, the toroidal coil comprising the energy harvester could also be made a single piece, in the shape of a bellow, and installed by grappling it around the anode and using a latch to secure the two ends mechanically together- without the need for any external electrical connection among them.

In an embodiment, the at least one sensor and wireless transceiver unit are electrically connected to the energy harvester. A wireless communication of the device allows the connection of the device with an external computing unit connected to a second wireless transmitter for communicating with the device wireless transmitter. The sensor units deployed in the cell measure independent anode electrical current flows. Allowing multi-anode current modelling and analysis, leading to relevant metrics that inform the state of the cell such as anodic current distribution, magneto hydrodynamics, and gas layer evolution.

In another embodiment, the reactive field in the busbar is used as a communication medium, providing an additional internode communication link, providing a dual communication channel telemetry and making the system more robust. Besides efficient data collection and processing, active communication redundancy provides resiliency and service degradation information. This feature also facilitates diagnostics in an eventual component failure.

Using the reactive field in the busbar as a communication medium introduces short-range, low power, and high data-rate dedicated inductive links among nodes. The reactive field in the busbar provide higher bandwidth than the radio and adds energy efficiency to the sensor design. The data rate of the inductive link depends on the available channel bandwidth, determined by the stray inductance and capacitance of the current-carrying structure, the distance among the nodes, and among other factors. Depending on the cell physical design, the internode communication link is obtained by directly coupling the nodes via the busbar with dedicated RF transformers, a wideband near-field data transmission, or both.

The high bandwidth of the inductive links allows for low-latency internode messages and precise time sync among the nodes' clocks. Then, time-synchronous multi-anode current measurement further enhances the cell model predictability. For example, a sub-microsecond time sync accuracy in the multi-anode current measurement allows mapping the electrolyte instantaneous surface current density, enabling hitherto unfeasible anode-butt gas bubble formation and cell magneto hydrodynamics modelling.

In an embodiment, the data link physical layer can rely on FSK/PSK/OFDM digital modulation techniques, requiring a carrier or numerous sub-carriers. Depending on the resulting channel, a carrier-less data telemetry scheme, e.g., Single Pulse Harmonic Modulation (SPHM), helps to conserve power. The latter takes advantage of the self-resonant impulse response and a relatively high-Q inductive link created by the current carrying structure of the cell (the resonance frequency would be a few tens megahertz). SPHM requires no local oscillator or mixer in the transceiver, simplifying the circuit design and lower implementation complexity in providing a direct baseband inductive link.

In an embodiment, adaptive power transmission further mitigates interference and facilitates energy efficiency of the internode inductive link communications. The inductive link parameters are selected for adequate scalability, increasing signal-to-noise ratio for intra-cell node communication capacity while avoiding inter-cell node interference.

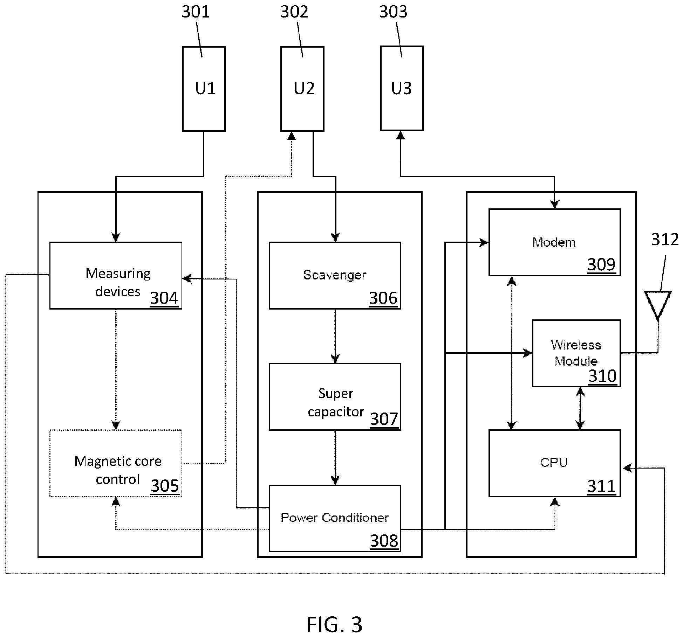

Fig. 3 is a block diagram showing two embodiments of the device, having units U1 301, U2 302, and U3 303 coupled to the current bar. All arrowhead lines indicate signals and power flows. The unit U1 301, includes at least one sensing element to measure the magnitude of the electrical current and operates with the measurement devices 304, which may include other sensors and signal conditioning electronics.

In an embodiment, a magnetic core control 305 sets the magnetic operational point of a pulse transformer, part of device U2 302. In another embodiment, the magnetic core control 305 is absent, since the pulse transformer core is air. Hence discontinues lines are used to represent 305. The unit U2 302 is the energy harvester, comprising an energy scavenger 306. The energy scavenger 306 charges the supercapacitor 307 for storing scavenged energy. A power conditioner 308 delivers power to all active electronic circuits.

The communication unit U3 303, is an inductive-link-based transceiver unit, comprising a modem 309, and operating along a wireless radio unit 310. The modem 309 allows direct communication among multiple alike devices, e.g., installed on the same electrolysis cell. The modem 309, the wireless unit 310 interoperate via the CPU, wherein the wireless radio unit comprises an antenna 312 allowing for a wireless transmission of the measured information to an external processing unit.

In another embodiment, units U1-U2-U3 can be built into a single magnetic coupling circuit, like a multi-winding transformer, installed on the current bar.

The signals from at least one sensor is processed by the CPU and communicated to other devices for further data aggregations and processing, e.g., to determine cell level metrics like anode-current imbalances. In this case the signals can be sent to other analogous devices using the modem of the inductive-link transceiver.

The current sensor in U1 301, would sample the bar's current fast enough, for example 300 times per second, to detect instantaneous current fluctuations in the anode bar, including small variations which can originate due to gas bubble formation in the bottom side of the anode butt.

The at least one sensor signal, and the multi-device processed data, can be communicated to the cell controlled via the wireless module.

The inductive-link transceiver and the wireless module can provide active redundant and full-fledged communicating capabilities to the sensor node installed on the current bar.

## Claims

1. A device for determining at least one physical property related to an electrolysis cell, comprising:
- an energy harvester comprising
- a holding mechanism comprising a conductor coil having a number of turns along at least a part of the holding mechanism, wherein the holding mechanism is configured for fastening around an anode rod or busbar of the electrolysis cell,
- at least one sensor configured for measuring at least one physical property of the electrolysis cell, and
- a radio transceiver unit, configured for communicating information based on the measured at least one physical property.

2. The device according to claim 1, wherein the electrolysis cell is a metal production cell, such as an aluminium production cell.

3. The device according to any one of the preceding claims, wherein the electrolysis cell is an energy production cell and/or an energy storage cell, such as a liquid metal battery.

4. The device according to any one of the preceding claims, wherein the holding mechanism is fastened around an anode rod or busbar of the electrolytic cell by a compression mesh wrap or clamp mechanisms.

5. The device according to any one of the preceding claims, wherein the at least one sensor and wireless transceiver unit are electrically connected to the energy harvester.

6. The device according to any one of the preceding claims, wherein the primary conductor coil has toroidal or linear geometry.

7. The device according to any one of the preceding claims, wherein conductor coil having a number of turns defines a hollow core, wherein the core is filled with air or a metallic compound.

8. The device according to any of the preceding claims, wherein the conductor coil is a primary conductor coil and the device further comprises a secondary conductor coil, wherein the primary conductor coil and the secondary conductor coil are configured to function as a transformer.

9. The device according to claim 8, wherein the device comprises a capacitor, preferably a supercapacitor, configured for storing electrical energy from the secondary conductor coil.

10. The device according claim 9, wherein the capacitor is configured for supplying the electrical energy to the at least one sensor.

11. The device according to any of the preceding claims, wherein the at least one sensor is an ammeter configured for measuring the electrical current flowing through a segment of the anode rod or busbar in the electrolysis cell.

12. The device according to any of the preceding claims, wherein the at least one sensor is a magnetometer configured for measuring the magnetic field generated by the electrical current flowing through the anode rod or the busbar in the electrolysis cell, such as a Hall effect device, a flux gate or a magneto resistor.

13. The device according to any of the preceding claims, wherein the at least one sensor is a thermometer of any unit comprising the electrolysis cell, such as a solid state temperature sensor or a thermocouple.

14. The device according to any of the preceding claims, wherein the at least one sensor is a gas chemical composition measuring device emanating from the electrolysis cell, such as a photoionization detector or a nondispersive infrared sensor.

15. A system comprising the device according to any of the preceding claims and a computing unit configured for receiving data from at least one sensor through the wireless transceiver unit.
